# EUROPÄISCHE PATENTSCHRIFT

(11) **EP 0 534 034 B1**
(45) Veröffentlichungstag und Bekanntmachung des Hinweises auf die Patenterteilung: **29.07.1998**
(21) Anmeldenummer: 91810746.7
(22) Anmeldetag: 24.09.1991
(51) Int. Cl.: A21D 13/00

(54) **Verfahren zur Herstellung von Gegenständen aus essbarem oder biologisch leicht abbaubarem Material**
Method for manufacturing articles made of edible or easily fermentable materials
Procédé pour la fabrication d'articles réalisés en des matériaux comestibles ou facilement fermentables

(43) Veröffentlichungstag der Anmeldung: 31.03.1993
(73) Patentinhaber: Haussener, Ernst, CH-3073 Gümligen (Kanton Bern) (CH)
(72) Erfinder: Berger, Erhard, 3110 Münsingen (DE); Haussener, Ernst, 3073 Gümligen (Kanton Bern) (CH)
(74) Vertreter: Fischer, Franz Josef

(56) Entgegenhaltungen:
- DE-A- 2 508 026
- DE-A- 2 634 620
- DE-A- 2 738 403
- DE-A- 3 044 590
- GB-A- 2 179 589
- US-A- 4 076 846
- PATENT ABSTRACTS OF JAPAN vol. 8, no. 150 (C-233)(1587) 12. Juli 1984

## Beschreibung

Die vorliegende Erfindung betrifft ein Verfahren zur Herstellung von Gegenständen, wie Einweggebinden oder Wegwerfgeschirr für Haushalt und Gastronomie, aus essbarem oder biologisch leicht abbaubarem Material.

Mit der weltweiten Zunahme des Anfalls von Hauskehricht, wird die Entsorgung von schwer abbaubaren Kunststoffteilen immer mehr zu einem Problem, das einer umweltfreundlichen Lösung bedarf. Die immer beliebter werdenden Fastfood-Restaurants werden wegen ihrer Verwendung von Wegwerfgeschirr aus Kunststoffen, wie Polystyrol, und der daraus resultierenden umfangreichen Abfallproduktion zunehmend kritisiert. Es werden schon seit mehreren Jahren Anstrengungen unternommen, Materialien bereitzustellen, die umweltfreundlich herstellbar sind, und deren Entsorgung zu keinen Problemen, wie Luft- oder Gewässerbelastung, führt. Gegenwärtig konnten noch keine solchen Materialien einen Durchbruch in der Praxis verzeichnen.

Es ist demzufolge Aufgabe der vorliegenden Erfindung, ein Verfahren für die Herstellung von Gegenständen, wie Wegwerfgeschirr u.ä., zur Verfügung zu stellen, welches umweltfreundlich und kostengünstig durchführbar und und zu Produkten führt, die biologisch leicht abbaubar (kompostierbar) oder sogar essbar sind, bzw. zusammen mit Speiseresten als Tierfutter verwendet werden können. Eine weitere Aufgabe besteht darin, als Ausgangsstoffe Materialien zu verwerten, die bei der Aufbereitung und Herstellung von Lebensmitteln anfallen.

In der US-A-4 777 058 ist ein Verfahren zur Herstellung von Tierfutter beschrieben, worin tierische Proteine und stärkehaltiges Material als Ausgangsmaterial dienen und einer Extrusion unterworfen wird. Es wird ein Produkt mit einer knusprigen Hülle erhalten, das während dem Herstellungsprozess mit einem deformierbaren Inhalt gefüllt werden kann. Die Druckschrift enthält jedoch keinen Hinweis, dass das extrudierte Material für die Herstellung eines Materals geeignet ist, das zum Formen von Gegenständen mit günstigen mechanischen Eigenschaften eingesetzt werden kann, wie dies durch das Verfahren gemäss der vorliegenden Erfindung vorgeschlagen wird.

In der US-A-4,076,846 wird eine essbare, wasserlösliche thermoplastische Zusammensetzung beschrieben, die zum Formen von Artikeln geeignet ist. Sie kann durch einen Extruder in eine geeignete Form gebracht werden. Als Addidive sind organische Weichmacher, beispielsweise aus der Gruppe der mehrwertigen Alkohole niederen Molkulargewichts, und Gleitmittel, beispielsweise aus der Gruppe der Ester von höheren Fettsäuren und deren Phosphorderivate oder Lecithin, erforderlich. Erfindungsgemäss wurde nun gefunden, dass derartige essbare Artikel hergestellt werden können, wenn eine Masse verwendet wird, die tierisches Eiweissmaterial, wie Bindegewebe-Eiweiss, das aus Fleisch besteht, das durch Extraktion mit einem Gas im flüssigen oder überkritischen Zustand entfettet worden ist, und stärkehaltiges Getreide- oder Gemüsematerial enthält.

Gegenstand der vorliegenden Erfindung ist somit das im Patentanspruch 1 definierte Verfahren zur Herstellung von Gegenständen aus essbarem oder biologisch leicht abbaubarem Material.

Die erfindungsgemäss erhältlichen Gegenstände können, was das tierische Eiweissprodukt anbelangt, aus Rohstoffen hergestellt werden, die in Schlachterei-Betrieben anfallen. In Anbetracht, dass sich nicht alle Fleischprodukte bei den anspruchsvollen Konsumenten der gleichen Beliebtheit erfreuen, wird durch das erfindungsgemässe Verfahren auch für die weniger begehrten Produkte eine sinnvolle Verwertung aufgezeigt. Das Eiweissprodukt kann beispielsweise nach den Verfahren erhalten werden, wie sie in der EP-A-0 014 685 (entsprechend US-A-4 280 691) und in der EP-A-0 052 078 beschrieben sind. Diese Dokumente beschreiben Extraktionsverfahren von Fleischprodukten durch Gase im überkritischen Zustand. Als solches Gas wird vorzugsweise insbesondere CO₂ verwendet, wobei jedoch die Extraktion auch mit andern Gasen wie Lachgas, Ethan, Ethylen, fluorierte Kohlenwasserstoffe etc. durchgeführt werden kann. Die Extraktion erfolgt statisch, z.B. in einem Autoklaven, wobei die Extraktionsdauer 10 bis 120 min beträgt. Je nach dem zu extrahierenden Material, kann dieses vor der Extraktion einer zusätzliche Behandlung unterworfen werden, wie z.B. Verkleinern und/oder Vermischen mit strukturgebenden Lebensmitteln. Die Verfahren dienen in erster Linie zur Gewinnung von reinen, lösungsmittelfreien tierischen Fetten, wobei als Rückstände lösungsmittelfreie Bindegewebe-Eiweissprodukte anfallen, die bisher meist zu Tierfutter, aber auch zu andern Produkten, wie Würsten, verarbeitet wurden. Das erfindungsgemässe Verfahren stellt nun eine sinnvolle Verarbeitungsmöglichkeit von Fleischsorten dar, deren Nachfrage im Vergleich zum Angebot ungenügend ist.

Zur Durchführung des erfindungsgemässen Verfahrens wird in einer Mischvorrichtung, wie sie in der lebensmittelverarbeitenden Industrie normalerweise zum Einsatz gelangt, ein tierisches Eiweissprodukt, ein stärkehaltiges Gemüse- oder Getreideprodukt, sowie gegebenenfalls Gewürze und andere Lebensmittelhilfsstoffe mit Wasser zu einer Masse von dickflüssiger bis teigartiger Konsistenz vermischt. Beispiele von stärkehaltigen Produkten sind getrocknete Produkte aus Weizen, Mais, Hirse, Kartoffeln. Maniok, Erbsen und Bohnen. Gewünschtenfalls kann zur Erhöhung des Proteingehaltes auch Sojamehl zugesetzt werden.

Anschliessend wird die Masse von dickflüssiger bis teigartiger Konsistenz zu Halbfabrikaten extrudiert. Die Konsistenz der eingesetzten Masse ist jedoch derart, dass sie zur Weiterverarbeitung kontinuierlich dem Extruder zugeführt werden kann. Die Verarbeitung im Extruder wird vorteilhafterweise bei einem Druck von 2,07 MPa (300 psi) bis 5,86 MPa (850 psi) durchgeführt. Gute Resultate werden erzielt, wenn ein Druck von etwa 3,85 MPa (550 psi) angewandt wird. Ist das Ausgangsprodukt zu dünnflüssig, kann der im Extruder erforderliche Druck nicht aufgebaut werden.

Die Zwischenprodukte werden normalerweise in Form von elastischen Strängen aus dem Extruder ausgestossen. Zur Weiterverarbeitung können diese als solche oder aber in zerkleinerter Form verwendet werden. Während dem Extrusionsvorgang ("Kochextrusion") können Temperaturen bis zu 300 °C auftreten. Die Temperatur lässt sich leicht durch zweckmässige Einstellung der Parameter, wie Arbeitsdruck und Wasserzufuhr regeln. Vorzugsweise wird der Druck des Extruders so eingestellt, dass Temperaturen im Bereich von 180-200°C auftreten. Typischerweise dauert die Verweilzeit des verarbeiteten Materials in der formgebenden Düse im Spritzkopf ca. 8 Sek., wobei die Temperatur kontinuierlich von 25 °C auf 185 °C ansteigt und vor dem Austritt wieder auf ca. 135 °C gesenkt wird. Nötigenfalls muss die Düse bei der Austrittsöffnung durch Kühlwasser gekühlt werden. Zu hohe Austrittstemperaturen können zu Siedeverzügen und zu einem unregelmässigen Produkt führen.

Überraschenderweise wurde festgestellt, dass die wertvollen Bestandteile der extrudierten Nahrungsmittel, trotz der hohen Temperaturen keine Schädigung erfahren. Dies ist offensichtlich dem Umstand zuzuschreiben, dass die genannten Temperaturen während dem Verarbeitungsprozess nur während der sehr kurzen Zeit im Bereich von 0,5 bis 30 Sek. auftreten. Zu bemerken ist dabei noch, dass die verarbeitete Masse durch die Anwendung von Druck äusserst gleichmässig erwärmt wird. Dabei werden Unregelmässigkeiten, wie lokale Überhitzungen vermieden. Die gleichmässig hohe Temperatur im Bereich der Düse bietet ebenfalls Gewähr dafür, dass mögliche Keime in der gesamten Masse wirksam vernichtet werden können.

Bezogen auf ihre Trockensubstanz enthält die für die Extrusion eingesetzte Masse vorzugsweise folgende Zusammensetzung:
- 2 - 40 Gew.%: Bindegewebe-Eiweiss
- 60- 90 Gew.%: Weizenmehl
- 0 - 5 Gew.%: Kochsalz
- 0 - 10 Gew.%: Zucker.
Der Wassergehalt der Masse kann, je nach dem im Bindegewebe-Eiweiss bereits vohandenen Wassergehalt und der gewünschten Konsistenz, durch die Einstellung der Wasserzuleitung während dem Extrusionsvorgang eingestellt werden. Zusätzlich können auch noch andere Komponenten, wie Gewürze, Geschmacksstoffe, Lebensmittelfarbstoffe und Hilfsstoffe, zum Einsatz gelangen.

Zu seiner Weiterverarbeitung gelangt das im erfindungsgemässen Verfahren auftretende Halbfabrikat vorzugsweise in Form von plastisch verformbaren Strängen zum Einsatz. Chips, Pellets, Platten, etc. sind jedoch auch möglich. Das Material lässt sich ähnlich verarbeiten wie Kunststoff und kann somit als Kunststoffersatz Anwendung finden. Je nach seiner Zusammensetzung und der Verarbeitungstemperatur werden Erzeugnisse verschiedener Härte, Festigkeit und Flüssigkeitsbeständigkeit erhalten. Ein kleinerer Wassergehalt bzw. ein höherer Druck führt normalerweise zu festeren Produkten.

Im erfindungsgemässen Verfahren wird das Material in einem an sich bekannten Spritzgussverfahren zu Gegenständen weiterverarbeitet. Besonders bevorzugt werden Einweg-Essgeschirr und -Bestecke hergestellt, die in der Gastronomie und im Haushalt eingesetzt werden können. Es können jedoch auf diese Art auch Verpackungen, Gehäuse u.ä. gespritzt werden. Als Spritzgussanlagen kommen ähnliche oder identische Anlagen in Frage, wie sie für die Kunststoffverarbeitung verbreitet sind. Bei der Verarbeitung werden Temperaturen von 60-150 °C und vorzugsweise etwa 135 °C erreicht.

Die beiden Verfahrensschritte der Extrusion können auch nacheinander in einer einzigen Anlage durchgeführt werden, z.B. indem der vom Extruder ausgestossene Strang direkt in eine zur Anlage gehörende, synchron arbeitende Spritzguss-Apparatur geführt wird, oder aber beide Verfahrensschritte direkt in einer Spritzgussanlage oder in einer solchen in Kombination mit einem Extruder ausgeführt werden. Wie aus der Kunststoffverarbeitung bekannt, kann z.B. ein Extruder mit einer Schubschnecke zum Einsatz gelangen.

Die nachstehenden Beispiele dienen zur Erläuterung der vorliegenden Erfindung, ohne dass jedoch die im Anspruchsteil angegebene Erfindungsdefinition eine Einschränkung erfahren soll.

### Beispiel

Zu 1 kg aus einer maschinellen Entbeinungseinrichtung anfallender, zerkleinerter fetthaltiger Fleischmasse wurde in einem aufrechtstehenden zylinderförmigen Autoklaven bei 40 °C trockenes CO₂ bis zu einem Druck von 150 bar eingeleitet. Die Masse wurde während 90 Min. stationär extrahiert. Der Inhalt des Autoklaven wurde danach in Form einer Stange ausgestossen. Der extrahierte Fettanteil befand sich am Boden des Autoklaven und war sauber vom Extraktionsrückstand getrennt. Es wurde ca. 560 g Extraktionsrückstand und 440g Fett gewonnen. Der Extraktionsrückstand bestand vorwiegend aus Bindegewebe-Eiweiss mit einem Wassergehalt von 57 Gew.%

Das extrahierte Produkt wurde mit 800 g VollkornWeizenmehl unter Verwendung eines Rührwerkes vermischt, wobei der Masse 20 g Kochsalz zugegeben wurde. Anschliessend wurde die Masse einem Extruder zugeführt, wo sie unter Anwendung eines Druckes von 3,50 MPa (500 psi) und unter Zuführung von Wasser (ca. 10 %) extrudiert wurde. Dabei wurde eine maximale Temperatur von 185 °C erreicht, der die Masse während 2 Sek. ausgesetzt war. Die extrudierten plastisch verformbaren Stränge wurden gesammelt und für die Weiterverarbeitung bereitgestellt.

Das extrudierte Material wurde in eine übliche Spritzgussanlage eingeführt und mit einem Kolbendruck von bis zu 120 t (Temperatur bis 135 °C) zu Bechern gespritzt. Die Festigkeit der Becher nahm nach einer kurzen Lufttrocknung noch zu.

## Patentansprüche

1. Verfahren zur Herstellung von Gegenständen aus essbarem oder biologisch leicht abbaubarem Material, dadurch gekennzeichnet, dass ein tierisches Bindegewebe-Eiweiss gewonnen wird, indem Fleischmaterial, mit einem Gas im flüssigen oder überkritischen Zustand entfettet wird, anschliessend eine Mischung, die das erhaltene tierische Eiweiss und stärkehaltiges Getreide- oder Gemüsematerial enthält, in Form einer Masse von dickflüssiger bis teigartiger Konsistenz hergestellt wird, die Mischung unter Zuführung von Wasser zu einem plastisch verformbaren Material extrudiert wird, und das erhaltene Material durch Spritzgiessen zu Gegenständen geformt wird.

2. Verfahren nach Anspruch 1, dadurch gekennzeichnet, dass das Gas im flüssigen oder überkritischen Zustand flüssiges oder überkritisches Kohlendioxid ist.

3. Verfahren nach einem der Ansprüche 1 oder 2, dadurch gekennzeichnet, dass das stärkehaltige Getreide- und Gemüsematerial aus zerkleinerten Teilen von Weizen, Hafer, Roggen, Mais, Hirse. Reis, Kartoffeln, Maniok, Erbsen oder Bohnen besteht.

4. Verfahren nach einem der Ansprüche 1-3, dadurch gekennzeichnet, dass der Masse vor der Extrusion bis zu 5 Gew.% Kochsalz zugegeben wird, bezogen auf die gesamte Trockenmasse.

5. Verfahren nach einem der Ansprüche 2-4, dadurch gekennzeichnet, dass nach der Entfettung von tierischem Bindegewebe die zur Extrusion bestimmte Masse durch Vermischen von
2-40 Gew.% erhaltenem Bindegewebe-Eiweiss
60-90 Gew.% Vollkorn-Weizenmehl
0-5 Gew.% Kochsalz
0-10 Gew% Zucker und gegebenenfalls
Lebensmittelfarbstoff hergestellt wird, wobei die Gewichtsprozente auf die Gesamtmasse des Trockengewichtes bezogen sind, und der Masse während dem Extrusionsvorgang ca 10 Gew.% Wasser zudosiert wird.

6. Verfahren nach einem der Ansprüche 1-5, dadurch gekennzeichnet, dass die Extrusion so durchgeführt wird, dass das extrudierte Material während 10 sec bis 2 min Temperaturen von bis zu 300 °C, vorzugsweise von 180-200 °C ausgesetzt ist.

7. Verfahren nach Anspruch 6, dadurch gekennzeichnet, dass die Extrusion unter Anwendung eines Druckes von mindestens 2,07 MPa (300 psi) bis 5,86 MPa (850 psi) und vorzugsweise bei 3,85 MPa (550 psi) erfolgt.

8. Verfahren nach einem der Ansprüche 1-7, dadurch gekennzeichnet, dass die Schritte der Extrusion und des Spritzgiessens nacheinander in einer einzigen Anlage durchgeführt werden.

9. Verfahren nach Anspruch 8, dadurch gekennzeichnet, dass es direkt mittels einer Spritzgussanlage oder mit einer solchen in Kombination mit einem Extruder durchgeführt wird.

## Claims

1. Method of making articles of edible or easily biodegradable material, characterized in that an animal connective-tissue protein is obtained by removing the fat from meat using a gas in liquid or overcritical state, then a mixture which contains the obtained animal protein and starchy grain or vegetable material, is produced in the form of a mass of semifluid to pasty consistency, the mixture is extruded, with the addition of water, to form a plastically workable material, and the material obtained is moulded into articles by injection moulding.

2. Method according to claim 1, characterized in that the gas in liquid or overcritical state is liquid or overcritical carbon dioxide.

3. Method according to one of the claims 1 or 2, characterized in that the starchy grain and vegetable material consists of crushed parts of wheat, oats, rye, corn, millet, rice, potatoes, manioc, peas or beans.

4. Method according to one of the claims 1 - 3, characterized in that up to 5% by weight of table salt, relative to the total solids content, is added to the mass before extrusion.

5. Method according to one of the claims 2 - 4, characterized in that after removal of the fat from animal connective tissue, the mass to be extruded is produced by mixing of
2 - 40 % by weight of obtained animal connective tissue protein
60 - 90 % by weight of wholemeal wheat flour
0-5 % by weight of table salt
0 - 10 % by weight of sugar and if necessary
food colouring, the percentages by weight being relative to the total mass of the solids content, and approximately 10 % by weight of water being added to the mass during the extrusion step.

6. Method according to one of the claims 1 - 5, characterized in that the extrusion is carried out in such a way that the extruded material is subjected to temperatures of up to 300 °C, preferably between 180 and 200 °C, for 10 seconds to 2 minutes.

7. Method according to claim 6, characterized in that the extrusion takes place under application of a pressure of at least 2.07 MPa (300 psi) to 5.86 MPa (850 psi) and preferably at 3.85 Mpa (550 psi).

8. Method according to one of the claims 1 - 7, characterized in that the steps of extrusion and injection moulding are carried out successively in a single installation.

9. Method according to claim 8, characterized in that it is carried out directly by means of an injection-moulding installation or with such an installation in combination with an extruder.

## Revendications

1. Procédé de fabrication d'objets réalisés en matériau comestible ou facilement biodégradable, caractérisé en ce qu'on obtient un tissu conjonctif de protéine animale en dégraissant du matériau carné avec un gaz à l'état liquide ou surcritique, à la suite de quoi on prépare un mélange qui contient la protéine animale et le matériau féculent de céréale ou de légume sous la forme d'une masse de consistance visqueuse à pâteuse, on extrude le mélange en lui apportant de l'eau en un matériau plastiquement déformable et par moulage par injection on forme le matériau obtenu en objets.

2. Procédé selon la revendication 1, caractérisé en ce que le gaz à l'état liquide ou surcritique est du bioxyde de carbone liquide ou à l'état surcritique.

3. Procédé selon l'une des revendications 1 ou 2, caractérisé en ce que le matériau féculent de céréale et de légume se compose de parties fragmentées de froment, avoine, seigle, maïs, millet, riz, pomme de terre, manioc, pois ou haricots.

4. Procédé selon l'une des revendications 1 à 3, caractérisé en ce qu'on ajoute à la masse avant d'être extrudée jusqu'à 5% en poids de sel de cuisine, sur la base de la masse sèche totale.

5. Procédé selon l'une des revendications 2 à 4, caractérisé en ce qu'après le dégraissage du tissu conjonctif animal on prépare la masse destinée à l'extrusion en mélangeant
2-40 % en poids du tissu conjonctif de protéine obtenu
60-90 % en poids de farine de froment complète
0-5% en poids de sel de cuisine
0-10 % en poids de sucre et le cas échéant de colorant
alimentaire, les pourcentages en poids se référant à la masse totale du poids à l'état sec et environ 10% en poids d'eau étant additionnée à la masse pendant le processus d'extrusion.

6. Procédé selon l'une des revendications 1 à 5, caractérisé en ce que l'extrusion s'effectue de manière telle que le matériau extrudé est exposé pendant 10 sec à 2 min à des températures allant jusqu'à 300°C, de préférence de 180-200°C.

7. Procédé selon la revendication 6, caractérisé en ce qu'on effectue l'extrusion en utilisant une pression d'au moins 2,07 MPa (300 psi) à 5,86 MPa (850 psi) et de préférence d'une pression de 3,85 MPa (550).

8. Procédé selon l'une des revendications 1 à 7, caractérisé en ce que les étapes d'extrusion et de moulage par injection sont effectuées successivement dans une seule installation.

9. Procédé selon la revendication 8, caractérisé en ce que ce qu'on met directement en oeuvre ce procédé au moyen d'une installation de moulage par injection ou avec une telle installation combinée à une extrudeuse.
